# EUROPEAN PATENT SPECIFICATION

(11) **EP 2 942 716 B1**
(45) Date of publication and mention of the grant of the patent: **28.11.2018**
(21) Application number: 14735290.0
(22) Date of filing: 07.01.2014
(51) Int. Cl.: G06F 13/40

(54) **SIM CARD HOT-PLUG GUARD AND SIM CARD ON-SITE SHUTDOWN SWIPE-CARD METHOD, AND TERMINAL**
HOT-PLUG-SCHUTZ FÜR SIM-KARTE UND MAGNETKARTENVERFAHREN ZUR VOR-ORT-ABSCHALTUNG VON SIM-KARTE SOWIE ENDGERÄT
PROCÉDÉ DE CARTE MAGNÉTIQUE DE DÉSACTIVATION SUR SITE D'UNE CARTE SIM ET DE PROTECTION DE CONNEXION À CHAUD D'UNE CARTE SIM, ET BORNE

(30) Priority: 07.01.2013 CN 201310005055
(43) Date of publication of application: 11.11.2015
(73) Proprietor: Huawei Device (Dongguan) Co., Ltd., Dongguan, Guangdong 523808 (CN)
(72) Inventor: WANG, Hao, Shenzhen Guangdong 518129 (CN); TIAN, Xin, Shenzhen Guangdong 518129 (CN); LI, Yong, Shenzhen Guangdong 518129 (CN)
(74) Representative: Maiwald Patent- und Rechtsanwaltsgesellschaft mbH
(86) International application number: PCT/CN2014/070253
(87) International publication number: WO 2014/106499

(56) References cited:
- WO-A1-2012/157487
- CN-A- 102 325 203
- CN-A- 102 710 827
- CN-A- 102 761 346
- CN-A- 102 843 449
- CN-A- 103 064 816
- CN-U- 202 093 833
- FR-A1- 2 964 276
- US-A1- 2009 150 704
- US-A1- 2010 090 805
- US-A1- 2012 028 575

## Description

### TECHNICAL FIELD

The prevent invention relates to a SIM card hot plugging protection method, a SIM card in-position power-off card swiping method, and a terminal.

### BACKGROUND

With continuous development of a smartphone, a terminal develops to have a large battery capacity and become light and slim, and a built-in battery solution is used for an increasing number of terminals. A built-in battery structure enables a mobile phone user to insert a subscriber identity module card (Subscriber Identity Module card, SIM card for short) in or remove the SIM card from a SIM card holder more easily. No matter whether a terminal supports SIM card hot plugging, a user may insert the SIM card in or remove the SIM card from the SIM card holder by mistake when the terminal is in a power-on state.

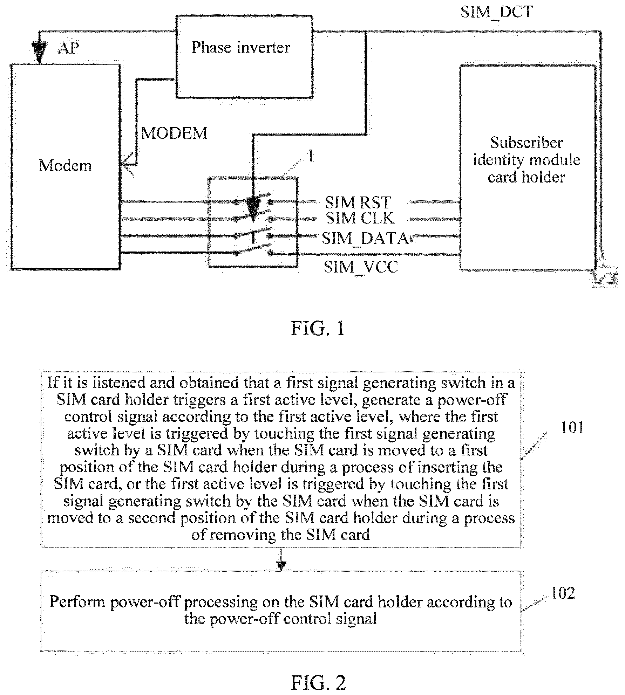

A primary problem during a SIM card hot plugging process is that: In a case in which a SIM card holder is not powered off, the SIM card holder is randomly in contact with a non-power signal of a SIM card, which causes an unexpected signal conflict and disorder of a power-on/power-off time sequence. As shown in FIG. 1, in an existing technical solution, SIM card hot plugging protection is implemented by using an in-position detection switch in a SIM card holder to directly control an analog transfer switch 1. In the prior art, the in-position detection switch generates a disconnection trigger signal SIM_DCT only after a SIM card is entirely removed from the SIM card holder or the SIM card is entirely inserted in the SIM card holder, so as to control the analog transfer switch 1 to disconnect a signal transmission path and a power supply path of the SIM card holder. Therefore, time sequence adjustment needs to be performed on the in-position detection switch to ensure that the disconnection trigger signal SIM_DCT is generated before the SIM card is almost in contact with or detached from the SIM card holder. In the prior art, time sequence adjustment is used to control the in-position detection switch to generate the disconnection trigger signal SIM _DCT, so as to implement SIM card hot plugging protection, which has relatively low reliability and sometimes may damage an interface of the SIM card during the SIM card hot plugging process.

In addition, in the prior art, for a terminal provided with a SIM card that supports an Near Field Communication (NFC) technology, when the terminal is in a power-off state, because a signal transmission path and a power supply path of a SIM card holder have been disconnected, the SIM card has no power supply and cannot perform information exchange. As a result, the terminal cannot implement an NFC card swiping function.

WO 2012/157487 A1 describes an information processing device and method, a recording medium, and a program, with which it is possible to prevent live insertion and removal of a SIM card. An eject part ejects a tray which stores a storage member. An eject detection part detects an operation of a commencement of an ejection of the tray before the tray is ejected by the eject part. It is possible to dispose a power supply control part which interrupts the supply of power to the storage part if the operation of the commencement of the ejection of the tray is detected by the eject detection part.

US 2012/028575 A1 describes a power supply control apparatus applied to a communication apparatus that is applied to a mobile apparatus. The power supply control apparatus includes a switch, coupled between the communication apparatus and a power supply; and a signal detecting unit, for detecting a wireless signal via an electromagnetic introduction approach to correspondingly generate a detection signal. It is determined whether to provide power to the communication apparatus via the switch according to the detection signal.

### SUMMARY

Multiple aspects of embodiments of the present invention provide a SIM card hot plugging protection method and a terminal, so as to enhance reliability of hot plugging protection, and further increase function diversity of a terminal, to facilitate usage of a user.

According to a first aspect of the present invention, a SIM card hot plugging protection method is provided, including:
if it is listened and obtained that a first signal generating switch in a subscriber identity module SIM card holder triggers a first active level, generating a power-off control signal according to the first active level, where the first active level is triggered by touching the first signal generating switch by a SIM card when the SIM card is moved to a first position of the SIM card holder during a process of inserting the SIM card; and
performing power-off processing on the SIM card holder according to the power-off control signal.

According to the foregoing SIM card hot plugging protection method, the performing power-off processing on the SIM card holder according to the power-off control signal is specifically:
performing power-off processing on the SIM card holder according to the power-off control signal by using a preset power-off sequence.

According to the foregoing SIM card hot plugging protection method, the preset power-off sequence may be as follows: first performing power-off processing on a signal path of the SIM card holder, and then performing power-off processing on a power supply path of the SIM card holder; and correspondingly
the performing power-off processing on the SIM card holder according to the power-off control signal by using a preset power-off sequence includes:
generating a first power-off trigger instruction according to the power-off control signal, so that an analog transfer switch disconnects the signal path of the SIM card holder according to the first power-off trigger instruction; and
generating a second power-off trigger instruction after a preset time interval following the generation of the first power-off trigger instruction expires, so that the analog transfer switch disconnects the power supply path of the SIM card holder according to the second power-off trigger instruction.

The foregoing SIM card hot plugging protection method may further include:
if it is listened and obtained that a second signal generating switch in the SIM card holder triggers a second active level, generating insertion information according to the second active level, where the second active level is triggered by touching the second signal generating switch by the SIM card when the SIM card is moved to the second position of the SIM card holder during a process of inserting the SIM card; and
sending the insertion information to a processor, so that the processor generates SIM card insertion prompt information according to the insertion information.

The foregoing SIM card hot plugging protection method may further include:
receiving power-on initialization information sent by a processor; and
performing initialization on a working time sequence of the SIM card holder according to the power-on initialization information.

According to a second aspect of the present invention, a terminal is provided, including:
a first monitoring module, configured to: when listening and obtaining that a first signal generating switch in a SIM card holder triggers a first active level, generate a power-off control signal according to the first active level, where the first active level is triggered by touching the first signal generating switch by a SIM card when the SIM card is moved to a first position of the SIM card holder during a process of inserting the SIM card; and
a power-off processing module, configured to perform power-off processing on the SIM card holder according to the power-off control signal.

According to the foregoing terminal, the power-off processing module is specifically configured to perform power-off processing on the SIM card holder according to the power-off control signal by using a preset power-off sequence.

According to the foregoing terminal, the power-off processing module may be specifically configured to generate a first power-off trigger instruction according to the power-off control signal, so that an analog transfer switch disconnects a signal path of the SIM card holder according to the first power-off trigger instruction; and generate a second power-off trigger instruction after a preset time interval following the generation of the first power-off trigger instruction expires, so that the analog transfer switch disconnects a power supply path of the SIM card holder according to the second power-off trigger instruction.

The foregoing terminal may further include:
a second monitoring module, configured to: when listening and obtaining that a second signal generating switch in the SIM card holder triggers a second active level, generate insertion information according to the second active level, where the second active level is triggered by touching the second signal generating switch by the SIM card when the SIM card is moved to the second position of the SIM card holder during a process of inserting the SIM card; and
a sending module, configured to send the insertion information to a processor, so that the processor generates SIM card insertion prompt information according to the insertion information.

According to the foregoing terminal, the first monitoring module is further configured to receive power-on initialization information sent by a processor, and performing initialization on a working time sequence of the SIM card holder according to the power-on initialization information.

It can be learnt from the foregoing technical solutions that, in the embodiments of the present invention, that a SIM card touches a first signal generating switch in a SIM card holder before the SIM card is inserted in or removed from the SIM card holder is monitored, where the first signal generating switch triggers a first active level; and before the SIM card is inserted in or removed from the SIM card holder, a signal transmission path and a power supply path of the SIM card holder are disconnected in time according to a power-off control signal that is generated according to the first active level, which effectively avoids occurrence of an unexpected signal conflict and disorder of a power-on/power-off time sequence. Compared with a technical solution of time sequence adjustment that is used in the prior art, the method provided in the embodiments of the present invention has higher reliability. The invention is as defined in the independent claims 1 and 4.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and a person of ordinary skill in the art may still derive other drawings from these accompanying drawings without creative efforts.
FIG. 1 is a schematic diagram of a SIM card hot plugging protection structure in the prior art;
FIG. 2 is a schematic flowchart of Embodiment 1 of a SIM card hot plugging protection method according to the present invention;
FIG. 3 is a schematic flowchart of Embodiment 2 of a SIM card hot plugging protection method according to the present invention;
FIG. 4 is a schematic flowchart of Embodiment 3 of a SIM card hot plugging protection method according to the present invention;
FIG. 5 is a schematic structural diagram of Embodiment 1 of a terminal according to the present invention;
FIG. 6 is a schematic structural diagram of Embodiment 2 of a terminal according to the present invention;
FIG. 7 is a schematic structural diagram of Embodiment 3 of a terminal according to the present invention;
FIG. 8 is a schematic structural diagram of a specific application instance of connecting a first monitoring module and a generating module in Embodiment 3 of the terminal according to the present invention;
FIG. 9 is a schematic flowchart of Embodiment 1 of a SIM card in-position power-off card swiping method according to the present invention; and
FIG. 10 is a schematic structural diagram of Embodiment 4 of a terminal according to the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

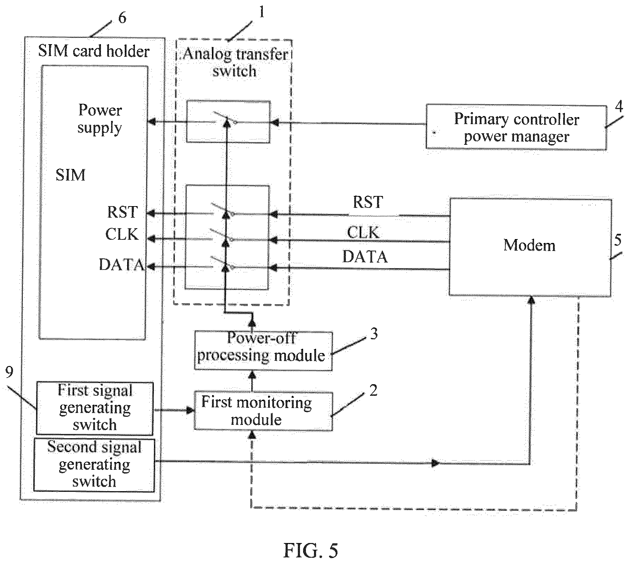

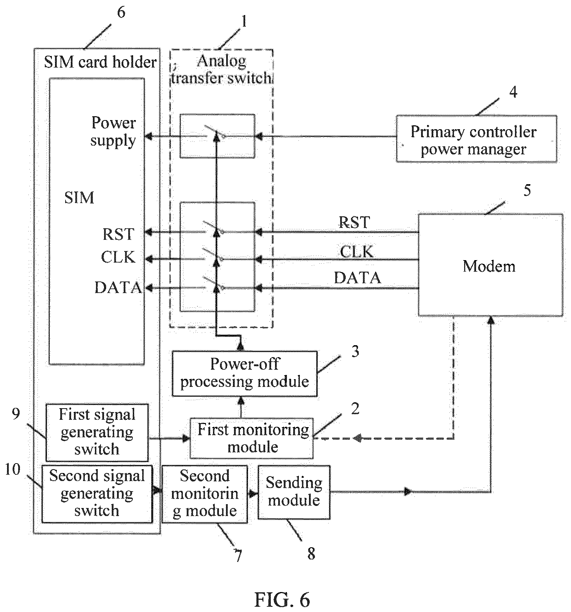

A method described in each embodiment provided in the present invention is applicable to a terminal shown in FIG. 5, FIG. 6, or FIG. 7. A SIM card holder of the terminal is provided with a first signal generating switch 9, and a trigger signal output end of the first signal generating switch 9 is connected to a first monitoring module 2, which is configured to monitor a level signal that is output from the trigger signal output end of the first signal generating switch. If the first monitoring module 2 listens and obtains that the first signal generating switch triggers a first active level, the first monitoring module 2 generates a power-off control signal according to the first active level, so as to disconnect a signal path of the SIM card holder and a power supply path of the SIM card holder. Further, as shown in FIG. 6, the SIM card holder of the terminal is further provided with a second signal generating switch 10. A trigger signal output end of the second signal generating switch 10 is connected to a second monitoring module 7. After the second monitoring module 7 listens and obtains that the second signal generating switch triggers a second active level, the second monitoring module 7 generates removal or insertion information according to the second active level, so that a sending module sends the removal or insertion information to a processor (not shown in the diagram) by using a modem, and the processor generates corresponding prompt information according to the removal or insertion information, so as to prompt a user with an in-position state of a SIM card.

It should be noted herein that, the first signal generating switch described in each embodiment provided in the present invention is the first switch that is touched by the SIM card during a process of inserting the SIM card in the SIM card holder, such as a switch disposed at a side of a PUSHPUSH card holder. When the SIM card is moved to a first position during the process of inserting the SIM card in the SIM card holder, the SIM card touches the switch at the side, and the switch at the side is namely the first signal generating switch. However, during a process of removing the SIM card from the SIM card holder, the first signal generating switch is the first switch that is touched by the SIM card during the process of removing the SIM card from the SIM card holder, such as a switch at a bottom of the PUSHPUSH card holder. During the process of removing the SIM card from the SIM card holder, when the SIM card is moved to a second position, the SIM card first touches the switch at the bottom, and the switch at the bottom is namely the first signal generating switch.

The second signal generating switch is the second switch that is touched by the SIM card during the process of inserting the SIM card in the SIM card holder, such as a switch disposed at the bottom of the PUSHPUSH card holder. During the process of inserting the SIM card in the SIM card holder, when the SIM card is moved to a second position (that is, a bottom of the SIM card holder), the SIM card touches the switch at the bottom of the PUSHPUSH card holder, and the switch at the bottom is namely the second signal generating switch. However, during the process of removing the SIM card from the SIM card holder, the second signal generating switch is the second switch that is touched by the SIM card during the process of removing the SIM card from the SIM card holder, such as a switch disposed at the side of the PUSHPUSH card holder. During the process of removing the SIM card from the SIM card holder, when the SIM card is moved to a first position, the SIM card touches the switch at the side, and the switch at the side is namely the second signal generating switch.

FIG. 2 is a schematic flowchart of Embodiment 1 of a SIM card hot plugging protection method according to the present invention. As shown in the flowchart, the method described in Embodiment 1 includes the following steps:
Step 101: If it is listened and obtained that a first signal generating switch in a SIM card holder triggers a first active level, generate a power-off control signal according to the first active level, where the first active level is triggered by touching the first signal generating switch by a SIM card when the SIM card is moved to a first position of the SIM card holder during a process of inserting the SIM card, or the first active level is triggered by touching the first signal generating switch by the SIM card when the SIM card is moved to a second position of the SIM card holder during a process of removing the SIM card.

Specifically, during the process of inserting the SIM card in the SIM card holder, the SIM card touches the first signal generating switch disposed in the SIM card holder. After the first signal generating switch is touched and triggers the first active level, a terminal generates the power-off control signal according to the first active level. In a practical application, if the SIM card holder is a card holder that includes two switches, such as a PUSHPUSH card holder, a switch first touched by the SIM card during a process in which the SIM card is inserted in the SIM card holder or removed from the SIM card holder can be used as the first signal generating switch. The first active level may be a high level or a low level, which may be specifically set according to a practical situation.

Step 102: Perform power-off processing on the SIM card holder according to the power-off control signal.

Specifically, the terminal performs power-off processing on the SIM card holder according to the power-off control signal by using a preset power-off sequence. The preset power-off sequence is as follows: first performing power-off processing on a signal path of the SIM card holder, and then performing power-off processing on a power supply path of the SIM card holder. Correspondingly, the performing power-off processing on the SIM card holder according to the power-off control signal by using a preset power-off sequence includes: first generating a first power-off trigger instruction according to the power-off control signal, so that an analog transfer switch disconnects the signal path of the SIM card holder according to the first power-off trigger instruction; and then, generating a second power-off trigger instruction after a preset time interval following the generation of the first power-off trigger instruction expires, so that the analog transfer switch disconnects the power supply path of the SIM card holder according to the second power-off trigger instruction.

In this embodiment, that a SIM card touches a first signal generating switch in a SIM card holder before the SIM card is inserted in or removed from the SIM card holder is monitored, where the first signal generating switch triggers a first active level; and before the SIM card is inserted in or removed from the SIM card holder, a signal transmission path and a power supply path of the SIM card holder are disconnected in time according to a power-off control signal that is generated according to the first active level, which effectively avoids occurrence of an unexpected signal conflict and disorder of a power-on/power-off time sequence. Compared with a technical solution of time sequence adjustment that is used in the prior art, the method provided in this embodiment of the present invention has higher reliability.

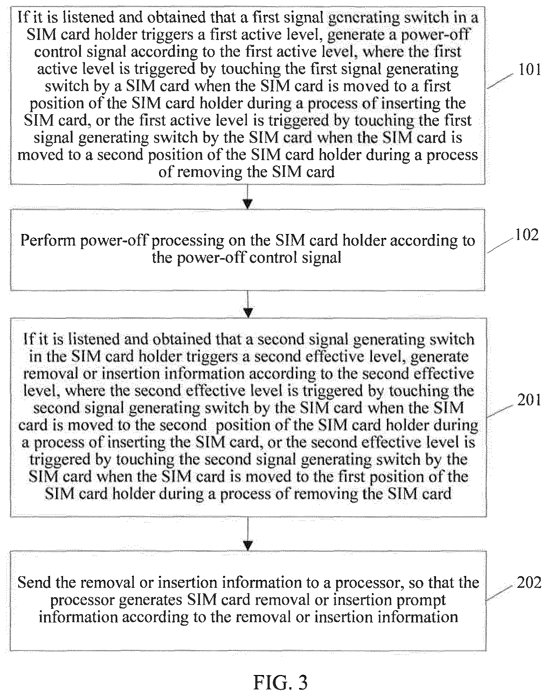

Further, as shown in FIG. 3, the method provided in the foregoing Embodiment 1 further includes the following steps:
Step 201: If it is listened and obtained that a second signal generating switch in the SIM card holder triggers a second active level, generate removal or insertion information according to the second active level, where the second active level is triggered by touching the second signal generating switch by the SIM card when the SIM card is moved to the second position of the SIM card holder during a process of inserting the SIM card, or the second active level is triggered by touching the second signal generating switch by the SIM card when the SIM card is moved to the first position of the SIM card holder during a process of removing the SIM card.

For example, a PUSHPUSH card holder is provided with two switches. One switch is disposed at a side of the PUSHPUSH card holder, and the other switch is disposed at a bottom of the PUSHPUSH card holder. During the process of inserting the SIM card, the switch at the side is the first signal generating switch and the switch at the bottom is the second signal generating switch. On the contrary, during the process of removing the SIM card, the switch at the bottom is the first signal generating switch, and the switch at the side is the second signal generating switch. The second active level may be a high level or a low level, which may be specifically set according to a practical situation.

Step 202: Send the removal or insertion information to a processor, so that the processor generates SIM card removal or insertion prompt information according to the removal or insertion information.

Specifically, after receiving the removal information, the processor generates SIM card removal prompt information, and sends the SIM card removal prompt information to a display of the terminal, so as to notify a user that the SIM card has already been removed from the SIM card holder. When receiving the insertion information, the processor generates SIM card insertion prompt information, and sends the SIM card insertion prompt information to the display of the terminal, so as to notify the user that the SIM card has already been inserted in the SIM card holder.

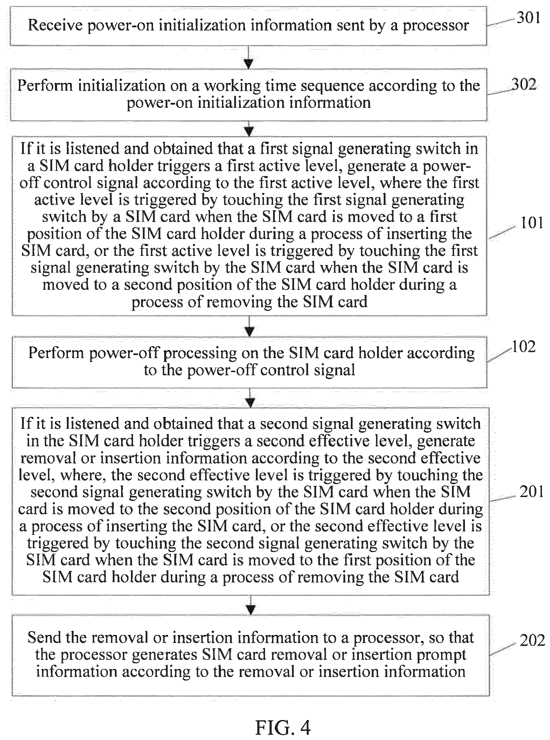

Further, as shown in FIG. 4, the method described in each of the foregoing embodiments may further include the following steps:
Step 301: Receive power-on initialization information sent by a processor.
Step 302: Perform initialization on a working time sequence according to the power-on initialization information.

Specifically, after the terminal is powered on, the processor sends the power-on initialization information to the SIM card holder. The terminal performs initialization on the working time sequence according to the received power-on initialization information, for example, initializing a working time sequence of a first monitoring module that is configured to monitor the first signal generating switch, so as to specify that the working time sequence of the first monitoring module in the SIM card holder is time sequence information specified by the processor.

Further, a terminal SIM card in-position power-off card swiping method includes the following steps:
first forcibly generate a power-on control instruction after a terminal is powered off; and
then send the power-on control instruction to an analog transfer switch, so that the analog transfer switch connects a signal path between a SIM card holder and a near field communication NFC controller, and a power supply path between the SIM card holder and the NFC controller according to the power-on control instruction, so that a SIM card inserted in the SIM card holder completes a card swiping process under the control of the NFC controller.

In this embodiment, after a terminal is powered off, an analog transfer switch is controlled to connect a signal path between a SIM card holder and a near field communication NFC controller, and a power supply path between the SIM card holder and the NFC controller, so that the NFC controller supplies power to the SIM card holder and the SIM card inserted in the SIM card holder can complete a card swiping process under the control of the NFC controller, which implements an NFC card swiping function of a terminal SIM card in an in-position power-off state, thereby further implementing function diversity of the terminal.

FIG. 5 is a schematic structural diagram of Embodiment 1 of a terminal according to the present invention. As shown in the diagram, a SIM card holder described in Embodiment 1 includes a first monitoring module 2 and a power-off processing module 3. The first monitoring module 2 is configured to: when listening and obtaining that a first signal generating switch 9 in a SIM card holder triggers a first active level, generate a power-off control signal according to the first active level, where the first active level is triggered by touching the first signal generating switch by a SIM card when the SIM card is moved to a first position of the SIM card holder during a process of inserting the SIM card, or the first active level is triggered by touching the first signal generating switch by the SIM card when the SIM card is moved to a second position of the SIM card holder during a process of removing the SIM card. The power-off processing module 3 is configured to perform power-off processing on the SIM card holder according to the power-off control signal.

In this embodiment, that a SIM card touches a first signal generating switch in a SIM card holder before the SIM card is inserted in or removed from the SIM card holder is monitored, where the first signal generating switch triggers a first active level; and before the SIM card is inserted in or removed from the SIM card holder, a signal transmission path and a power supply path of the SIM card holder are disconnected in time according to a power-off control signal that is generated according to the first active level, which effectively avoids occurrence of an unexpected signal conflict and disorder of a power-on/power-off time sequence. Compared with a technical solution of time sequence adjustment that is used in the prior art, the method provided in this embodiment of the present invention has higher reliability.

Specifically, the power-off processing module 3 described in the foregoing Embodiment 1 is specifically configured to perform power-off processing on the SIM card holder according to the power-off control signal by using a preset power-off sequence. More specifically, the power-off processing module 3 is configured to generate a first power-off trigger instruction according to the power-off control signal, so that an analog transfer switch 1 disconnects a signal path of the SIM card holder according to the first power-off trigger instruction; and generate a second power-off trigger instruction after a preset time interval following the generation of the first power-off trigger instruction expires, so that the analog transfer switch 1 disconnects a power supply path of the SIM card holder according to the second power-off trigger instruction. As shown in FIG. 5, the signal path of the SIM card holder is namely a connection path between a SIM card holder 6 and a modem 5. The power supply path of the SIM card holder is namely a connection path between the SIM card holder 6 and a primary controller power manager 4. The primary controller power manager 4 is a primary power management unit of the terminal, and is responsible for supplying power to each unit and component of the terminal.

Further, as shown in FIG. 6, the terminal described in the foregoing Embodiment 1 further includes a second monitoring module 7 and a sending module 8. The second monitoring module 7 is configured to: when listening and obtaining that a second signal generating switch 10 in the SIM card holder triggers a second active level, generate removal or insertion information according to the second active level, where the second active level is triggered by touching the second signal generating switch by the SIM card when the SIM card is moved to the second position of the SIM card holder during the process of inserting the SIM card, or the second active level is triggered by touching the second signal generating switch by the SIM card when the SIM card is moved to the first position of the SIM card holder during the process of removing the SIM card. The sending module 8 is configured to send the removal or insertion information to a processor (not shown in the diagram), so that the processor generates SIM card removal or insertion prompt information according to the removal or insertion information. Specifically, the processor and the sending module of the SIM card holder are connected by using the modem shown in the diagram, and exchange information by means of information conversion by using the modem.

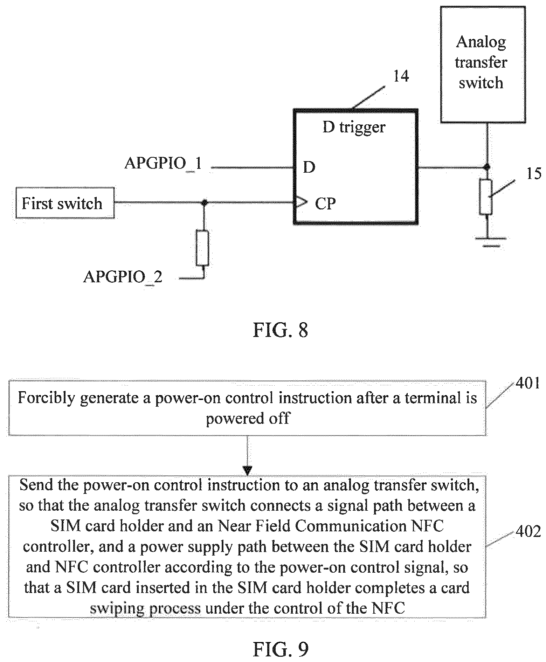

Further, in each of the foregoing embodiments of the terminal, the first monitoring module is further configured to receive power-on initialization information sent by the processor, and perform initialization on a working time sequence according to the power-on initialization information. Specifically, as shown in FIG. 8, the first monitoring module may use a D trigger. When the terminal is powered on, the processor sends the power-on initialization information to the D trigger of the SIM card holder, so as to specify a default basic working time sequence for the D trigger, which may be implemented by using two GPIOs (General Purpose Input Output, General Purpose Input/Output) in a practical application, that is, the processor specifies a basic working time sequence of an APGPIO-1 end connected to a D end and an APGPIO-1 end connected to a CP end in the diagram.

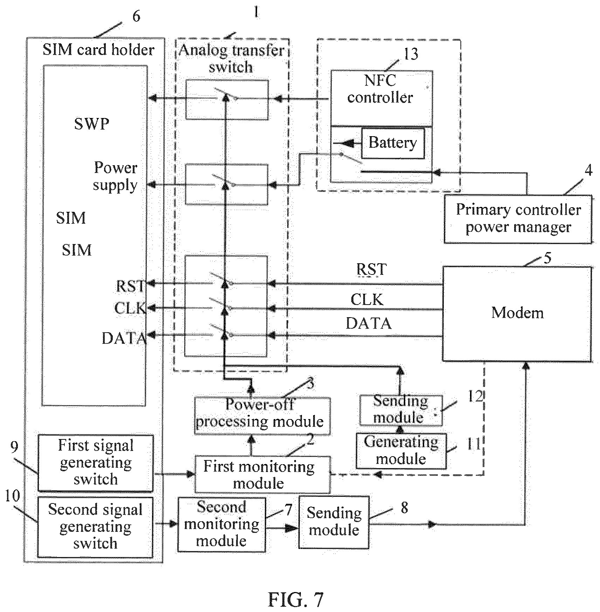

Further, if an NFC controller is provided in each of the foregoing embodiments of the terminal, and the SIM card inserted in the SIM card holder is a SIM card that supports an NFC technology, the terminal in each of the foregoing embodiments, as shown in FIG. 7, may further include a generating module 11 and a sending module 12. The generating module 11 is configured to forcibly generate a power-on control instruction after the terminal is powered off. The sending module 12 is configured to send the power-on control instruction to an analog transfer switch, so that the analog transfer switch connects a signal path between the SIM card holder and an NFC controller, and a power supply path between the SIM card holder and the NFC controller according to the power-on control instruction, so that a SIM card inserted in the SIM card holder completes a card swiping process under the control of the NFC controller.

Specifically, if the first monitoring module in the terminal uses the D trigger, the generating module may use a pull-down resistor 15. As shown in FIG. 8, one end of the pull-down resistor 15 is grounded, and the other end of the pull-down resistor 15 is connected to an output end of a D trigger 14. When the terminal is powered off, the D trigger 14 does not have a power supply, and therefore, the output end of the D trigger 14 is not controlled. In this case, under an effect of the pull-down resistor 15, a low level is forcibly output, so that the analog transfer switch is closed, that is, both the signal path between the SIM card holder and the near field communication NFC controller and the power supply path between the SIM card holder and the NFC controller are connected.

In this embodiment, after a terminal is powered off, an analog transfer switch is controlled to connect a signal path between a SIM card holder and a near field communication NFC controller, and a power supply path between the SIM card holder and the NFC controller, so that the NFC controller supplies power to the SIM card holder and the SIM card inserted in the SIM card holder can complete a card swiping process under the control of the NFC controller, which implements an NFC card swiping function of a terminal SIM card in an in-position power-off state, thereby further implementing function diversity of the terminal.

FIG. 9 is a schematic flowchart of Embodiment 1 of a terminal SIM card in-position power-off card swiping method according to the present invention. As shown in the flowchart, a terminal subscriber identity module card in-position power-off card swiping method according to this Embodiment 1 includes the following steps:
Step 401: Forcibly generate a power-on control instruction after a terminal is powered off.
Step 402: Send the power-on control instruction to an analog transfer switch, so that the analog transfer switch connects a signal path between a SIM card holder and a near field communication NFC controller, and a power supply path between the SIM card holder and the NFC controller according to the power-on control instruction, so that a SIM card inserted in the SIM card holder completes a card swiping process under the control of the NFC controller.

In this embodiment, after a terminal is powered off, an analog transfer switch is controlled to connect a signal path between a SIM card holder and a near field communication NFC controller, and a power supply path between the SIM card holder and the NFC controller, so that the NFC controller supplies power to the SIM card holder and the SIM card inserted in the SIM card holder can complete a card swiping process under the control of the NFC controller, which implements an NFC card swiping function of a terminal SIM card in an in-position power-off state, thereby further implementing function diversity of the terminal.

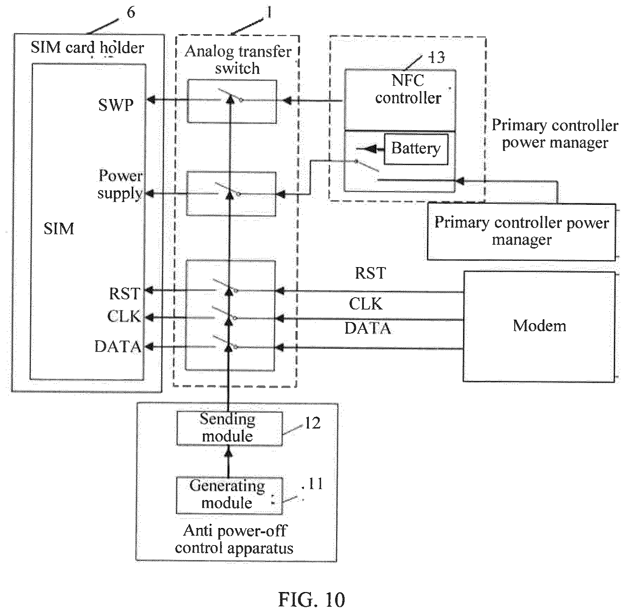

FIG. 10 is a schematic structural diagram of Embodiment 4 of a terminal according to the present invention. As shown in the diagram, the terminal described in this embodiment includes a generating module 11 and a sending module 12. The generating module 11 is configured to forcibly generate a power-on control instruction when the terminal is in a power-off state. The sending module 12 is configured to send the power-on control instruction to an analog transfer switch 1, so that the analog transfer switch 1 connects a signal path between a SIM card holder 6 and a near field communication NFC controller 13, and a power supply path between the SIM card holder 6 and the NFC controller 13 according to the power-on control instruction, so that a SIM card inserted in the SIM card holder 6 completes a card swiping process under the control of the NFC controller.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In addition, the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be noted that, for ease of description, the foregoing method embodiments are described as a series of action combinations. However, a person skilled in the art should understand that the present invention is not limited to the described sequence of the actions, because some steps may be performed in another sequence or performed at the same time according to the present invention. In addition, a person skilled in the art should also understand that all the embodiments described in this specification belong to exemplary embodiments, and the involved actions and modules are not necessarily mandatory to the present invention.

In the foregoing embodiments, the description of each embodiment has respective focuses. For a part that is not described in detail in an embodiment, reference may be made to related descriptions in other embodiments.

When the foregoing integrated unit is implemented in a form of a software functional unit, the integrated unit may be stored in a computer-readable storage medium. The software functional unit is stored in a storage medium and includes several instructions for instructing a computer device (which may be a personal computer, a server, or a network device) or a processor to perform a part of the steps of the methods described in the embodiments of the present invention. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

Finally, it should be noted that the foregoing embodiments are merely intended for describing the technical solutions of the present invention but not for limiting the present invention. Although the present invention is described in detail with reference to the foregoing embodiments, a person of ordinary skill in the art should understand that they may still make modifications to the technical solutions described in the foregoing embodiments or make equivalent replacements to some technical features thereof, without departing from the scope of the technical solutions of the embodiments of the present invention.

## Claims

1. A SIM card hot plugging protection method, comprising:
if it is listened and obtained that a first signal generating switch (9) in a SIM card holder (6) triggers a first active level, generating a power-off control signal according to the first active level,
**characterized in that**
the first active level is triggered by touching the first signal generating switch (9) by a SIM card when the SIM card is moved to a first position of the SIM card holder (6) during a process of inserting the SIM card; and
performing power-off processing on the SIM card holder (6) according to the power-off control signal;
wherein the performing power-off processing on the SIM card holder (6) according to the power-off control signal comprising:
performing power-off processing on the SIM card holder (6) according to the power-off control signal by using a preset power-off sequence.

2. The SIM card hot plugging protection method according to claim 1, wherein the preset power-off sequence is as follows: first performing power-off processing on a signal path of the SIM card holder (6), and then performing power-off processing on a power supply path of the SIM card holder (6); and correspondingly
the performing power-off processing on the SIM card holder (6) according to the power-off control signal by using a preset power-off sequence comprises:
generating a first power-off trigger instruction according to the power-off control signal, so that an analog transfer switch (1) disconnects the signal path of the SIM card holder (6) according to the first power-off trigger instruction; and
generating a second power-off trigger instruction after a preset time interval following the generation of the first power-off trigger instruction expires, so that the analog transfer switch (1) disconnects the power supply path of the SIM card holder (6) according to the second power-off trigger instruction.

3. The SIM card hot plugging protection method according to any one of claims 1 to 2, further comprising:
if it is listened and obtained that a second signal generating switch (10) in the SIM card holder (6) triggers a second active level, generating insertion information according to the second active level, wherein the second active level is triggered by touching the second signal generating switch (10) by the SIM card when the SIM card is moved to the second position of the SIM card holder (6) during a process of inserting the SIM card; and
sending the insertion information to a processor, so that the processor generates SIM card insertion prompt information according to the insertion information.

4. A terminal, comprising:
a first monitoring module (2), configured to: when listening and obtaining that a first signal generating switch (9) in a SIM card holder (6) triggers a first active level, generate a power-off control signal according to the first active level,
**characterized in that**
the first active level is triggered by touching the first signal generating switch (9) by a SIM card when the SIM card is moved to a first position of the SIM card holder (6) during a process of inserting the SIM card; and
a power-off processing module (3), configured to perform power-off processing on the SIM card holder (6) according to the power-off control signal;
wherein the power-off processing module (3) is specifically configured to perform power-off processing on the SIM card holder (6) according to the power-off control signal by using a preset power-off sequence.

5. The terminal according to claim 4, wherein the power-off processing module (3) is specifically configured to generate a first power-off trigger instruction according to the power-off control signal, so that an analog transfer switch (1) disconnects a signal path of the SIM card holder (6) according to the first power-off trigger instruction; and generate a second power-off trigger instruction after a preset time interval following the generation of the first power-off trigger instruction expires, so that the analog transfer switch (1) disconnects a power supply path of the SIM card holder (6) according to the second power-off trigger instruction.

6. The terminal according to any one of claims 4 to 5, further comprising:
a second monitoring module (7), configured to: when listening and obtaining that a second signal generating switch (10) in the SIM card holder (6) triggers a second active level, generate insertion information according to the second active level, wherein the second active level is triggered by touching the second signal generating switch (10) by the SIM card when the SIM card is moved to the second position of the SIM card holder (6) during a process of inserting the SIM card; and
a sending module (8), configured to send the insertion information to a processor, so that the processor generates SIM card insertion prompt information according to the insertion information.

## Patentansprüche

1. Hotpluggingschutzverfahren für eine SIM-Karte, das Folgendes umfasst:
wenn es abgehört und erhalten wird, dass ein erster Signalerzeugungsschalter (9) in einem SIM-Kartenhalter (6) eine erste Aktivitätsstufe auslöst, Erzeugen eines Ausschaltsteuersignals gemäß der ersten Aktivitätsstufe,
**dadurch gekennzeichnet, dass**
die erste Aktivitätsstufe durch Berühren des ersten Signalerzeugungsschalters (9) durch eine SIM-Karte ausgelöst wird, wenn die SIM-Karte während eines Prozesses des Einsetzens der SIM-Karte in eine erste Position des SIM-Kartenhalters (6) bewegt wird; und
Durchführen einer Ausschaltungsverarbeitung am SIM-Kartenhalter (6) gemäß dem Ausschaltsteuersignal;
wobei das Durchführen einer Ausschaltungsverarbeitung am SIM-Kartenhalter (6) gemäß dem Ausschaltsteuersignal Folgendes umfasst:
Durchführen einer Ausschaltungsverarbeitung am SIM-Kartenhalter (6) gemäß dem Ausschaltsteuersignal durch Verwenden einer voreingestellten Ausschaltsequenz.

2. Hotpluggingschutzverfahren für eine SIM-Karte nach Anspruch 1, wobei die voreingestellte Ausschaltsequenz wie folgt ist: zuerst Durchführen einer Ausschaltungsverarbeitung auf einem Signalpfad des SIM-Kartenhalters (6) und dann Durchführen einer Ausschaltungsverarbeitung auf einem Stromversorgungspfad des SIM-Kartenhalters (6) und entsprechend
das Durchführen einer Ausschaltungsverarbeitung am SIM-Kartenhalter (6) gemäß dem Ausschaltsteuersignal durch Verwenden einer voreingestellten Ausschaltsequenz Folgendes umfasst:
Erzeugen einer ersten Ausschaltauslöseanweisung gemäß dem Ausschaltsteuersignal, derart, dass ein analoger Transferschalter (1) den Signalpfad des SIM-Kartenhalters (6) gemäß der ersten Ausschaltauslöseanweisung trennt; und
Erzeugen einer zweiten Ausschaltauslöseanweisung, nachdem ein voreingestelltes Zeitintervall nach der Erzeugung der ersten Ausschaltauslöseanweisung abgelaufen ist, derart, dass der analoge Transferschalter (1) den Stromversorgungspfad des SIM-Kartenhalters (6) gemäß der zweiten Ausschaltauslöseanweisung trennt.

3. Hotpluggingschutzverfahren für eine SIM-Karte nach einem der Ansprüche 1 bis 2, das ferner Folgendes umfasst:
wenn es abgehört und erhalten wird, dass ein zweiter Signalerzeugungsschalter (10) im SIM-Kartenhalter (6) eine zweite Aktivitätsstufe auslöst, Erzeugen von Einsatzinformationen gemäß der zweiten Aktivitätsstufe, wobei die zweite Aktivitätsstufe durch Berühren des zweiten Signalerzeugungsschalters (10) durch die SIM-Karte ausgelöst wird, wenn die SIM-Karte während eines Prozesses des Einsetzens der SIM-Karte in eine zweite Position des SIM-Kartenhalters (6) bewegt wird; und
Senden der Einsatzinformationen an einen Prozessor, derart, dass der Prozessor Einsatzaufforderungsinformationen für eine SIM-Karte gemäß den Einsatzinformationen erzeugt.

4. Endgerät, das Folgendes umfasst:
ein erstes Überwachungsmodul (2), das zu Folgendem ausgelegt ist: wenn es abgehört und erhalten wird, dass ein erster Signalerzeugungsschalter (9) in einem SIM-Kartenhalter (6) eine erste Aktivitätsstufe auslöst, Erzeugen eines Ausschaltsteuersignals gemäß der ersten Aktivitätsstufe,
**dadurch gekennzeichnet, dass**
die erste Aktivitätsstufe durch Berühren des ersten Signalerzeugungsschalters (9) durch eine SIM-Karte ausgelöst wird, wenn die SIM-Karte während eines Prozesses des Einsetzens der SIM-Karte in eine erste Position des SIM-Kartenhalters (6) bewegt wird; und
ein Ausschaltungsverarbeitungsmodul (3), das dazu ausgelegt ist, eine Ausschaltungsverarbeitung am SIM-Kartenhalter (6) gemäß dem Ausschaltsteuersignal durchzuführen;
wobei das Ausschaltungsverarbeitungsmodul (3) speziell dazu ausgelegt ist, eine Ausschaltungsverarbeitung am SIM-Kartenhalter (6) gemäß dem Ausschaltsteuersignal durch Verwenden einer voreingestellten Ausschaltsequenz durchzuführen.

5. Endgerät nach Anspruch 4, wobei das Ausschaltungsverarbeitungsmodul (3) speziell dazu ausgelegt ist, eine erste Ausschaltauslöseanweisung gemäß dem Ausschaltsteuersignal zu erzeugen, derart, dass ein analoger Transferschalter (1) den Signalpfad des SIM-Kartenhalters (6) gemäß der ersten Ausschaltauslöseanweisung trennt; und eine zweite Ausschaltauslöseanweisung zu erzeugen, nachdem ein voreingestelltes Zeitintervall nach der Erzeugung der ersten Ausschaltauslöseanweisung abgelaufen ist, derart, dass der analoge Transferschalter (1) einen Stromversorgungspfad des SIM-Kartenhalters (6) gemäß der zweiten Ausschaltauslöseanweisung trennt.

6. Endgerät nach einem der Ansprüche 4 bis 5, das ferner Folgendes beinhaltet:
ein zweites Überwachungsmodul (7), das zu Folgendem ausgelegt ist: wenn es abgehört und erhalten wird, dass ein zweiter Signalerzeugungsschalter (10) im SIM-Kartenhalter (6) eine zweite Aktivitätsstufe auslöst, Erzeugen von Einsatzinformationen gemäß der zweiten Aktivitätsstufe, wobei die zweite Aktivitätsstufe durch Berühren des zweiten Signalerzeugungsschalters (10) durch die SIM-Karte ausgelöst wird, wenn die SIM-Karte während eines Prozesses des Einsetzens der SIM-Karte in eine zweite Position des SIM-Kartenhalters (6) bewegt wird; und
ein Sendemodul (8), das dazu ausgelegt ist, die Einsatzinformationen an einen Prozessor zu senden, derart, dass der Prozessor Einsatzaufforderungsinformationen für eine SIM-Karte gemäß den Einsatzinformationen erzeugt.

## Revendications

1. Procédé de protection de connexion à chaud d'une carte SIM consistant :
Si on entend et obtient qu'un premier commutateur de génération de signal (9) dans un support de carte SIM (6) déclenche un premier niveau actif, à générer un signal de commande de mise hors tension en fonction du premier niveau actif, **caractérisé en ce que**
le premier niveau actif est déclenché en touchant le premier commutateur de génération de signal (9) au moyen d'une carte SIM lorsque la carte SIM est déplacée vers une première position du support de carte SIM (6) pendant un processus d'insertion de la carte SIM ; et
à effectuer un traitement de mise hors tension sur le support de carte SIM (6) en fonction du signal de commande de mise hors tension ;
dans lequel la réalisation d'un traitement de mise hors tension sur le support de carte SIM (6) en fonction du signal de commande de mise hors tension consiste :
à effectuer un traitement de mise hors tension sur le support de carte SIM (6) en fonction du signal de commande de mise hors tension en utilisant une séquence de mise hors tension prédéfinie.

2. Procédé de protection de connexion à chaud d'une carte SIM selon la revendication 1, dans lequel la séquence de mise hors tension prédéfinie se déroule comme suit : effectuer d'abord un traitement de mise hors tension sur un trajet de signal du support de carte SIM (6) et, ensuite, effectuer un traitement de mise hors tension sur un trajet d'alimentation électrique du support de carte SIM (6) ; et par conséquent
la réalisation d'un traitement de mise hors tension sur le support de carte SIM (6) en fonction du signal de commande de mise hors tension en utilisant une séquence de mise hors tension prédéfinie consiste :
à générer une première instruction de déclenchement de mise hors tension en fonction du signal de commande de mise hors tension de telle sorte qu'un commutateur de transfert analogique (1) déconnecte le trajet de signal du support de carte SIM (6) en fonction de la première instruction de déclenchement de mise hors tension ; et
à générer une seconde instruction de déclenchement de mise hors tension après qu'un intervalle de temps prédéfini suivant la génération de la première instruction de déclenchement de mise hors tension expire, de telle sorte que le commutateur de transfert analogique (1) déconnecte le trajet d'alimentation électrique du support de carte SIM (6) en fonction de la seconde instruction de déclenchement de mise hors tension.

3. Procédé de protection de connexion à chaud d'une carte SIM selon l'une quelconque des revendications 1 à 2, consistant en outre :
Si on entend et obtient qu'un second commutateur de génération de signal (10) dans le support de carte SIM (6) déclenche un second niveau actif, à générer des informations d'insertion en fonction du second niveau actif, dans lequel le second niveau actif est déclenché en touchant le second commutateur de génération de signal (10) au moyen de la carte SIM lorsque la carte SIM est déplacée vers la seconde position du support de carte SIM (6) pendant un processus d'insertion de la carte SIM ; et
à envoyer les informations d'insertion à un processeur de telle sorte que le processeur génère des informations d'invite d'insertion de carte SIM en fonction des informations d'insertion.

4. Terminal comprenant :
un premier module de surveillance (2), configuré : lorsqu'on entend et obtient qu'un premier commutateur de génération de signal (9) dans un support de carte SIM (6) déclenche un premier niveau actif, pour générer un signal de commande de mise hors tension en fonction du premier niveau actif,
**caractérisé en ce que**
le premier niveau actif est déclenché en touchant le premier commutateur de génération de signal (9) au moyen d'une carte SIM lorsque la carte SIM est déplacée vers une première position du support de carte SIM (6) pendant un processus d'insertion de la carte SIM ; et
un module de traitement de mise hors tension (3), configuré pour effectuer un traitement de mise hors tension sur le support de carte SIM (6) en fonction du signal de commande de mise hors tension ;
dans lequel le module de traitement de mise hors tension (3) est spécialement configuré pour effectuer un traitement de mise hors tension sur le support de carte SIM (6) en fonction du signal de commande de mise hors tension en utilisant une séquence de mise hors tension prédéfinie.

5. Terminal selon la revendication 4, dans lequel le module de traitement de mise hors tension (3) est spécialement configuré pour générer une première instruction de déclenchement de mise hors tension en fonction du signal de commande de mise hors tension de telle sorte qu'un commutateur de transfert analogique (1) déconnecte un trajet de signal du support de carte SIM (6) en fonction de la première instruction de déclenchement de mise hors tension ; et pour générer une seconde instruction de déclenchement de mise hors tension après qu'un intervalle de temps prédéfini suivant la génération de la première instruction de déclenchement de mise hors tension expire, de telle sorte que le commutateur de transfert analogique (1) déconnecte un trajet d'alimentation électrique du support de carte SIM (6) en fonction de la seconde instruction de déclenchement de mise hors tension.

6. Terminal selon l'une quelconque des revendications 4 à 5, comprenant en outre :
un second module de surveillance (7), configuré : lorsqu'on entend et obtient qu'un second commutateur de génération de signal (10) dans le support de carte SIM (6) déclenche un second niveau actif, pour générer des informations d'insertion en fonction du second niveau actif, dans lequel le second niveau actif est déclenché en touchant le second commutateur de génération de signal (10) au moyen de la carte SIM lorsque la carte SIM est déplacée vers la seconde position du support de carte SIM (6) pendant un processus d'insertion de la carte SIM ; et
un module d'envoi (8), configuré pour envoyer les informations d'insertion à un processeur de telle sorte que le processeur génère des informations d'invite d'insertion de carte SIM en fonction des informations d'insertion.
